# EUROPEAN PATENT APPLICATION

(11) **EP 4 280 599 A1**
(43) Date of publication of application: **22.11.2023**
(21) Application number: 22784805.8
(22) Date of filing: 18.03.2022
(51) Int. Cl.: H04N 13/239, H04N 13/243, H04N 13/332, H04N 13/366, H04N 5/232, G02B 27/01

(54) **WEARABLE ELECTRONIC DEVICE COMPRISING PLURALITY OF CAMERAS**

(30) Priority: 09.04.2021 KR 20210046436
(71) Applicant: Samsung Electronics Co., Ltd., Suwon-si, Gyeonggi-do 16677 (KR)
(72) Inventor: CHO, Kyuhyung, Suwon-si, Gyeonggi-do 16677 (KR); SONG, Joonyoung, Suwon-si, Gyeonggi-do 16677 (KR); JEON, Jina, Suwon-si, Gyeonggi-do 16677 (KR)
(74) Representative: Nederlandsch Octrooibureau
(86) International application number: PCT/KR2022/003828
(87) International publication number: WO 2022/215895

(57) **Abstract**

An electronic device is provided. The electronic device includes a frame, a window member supported by the frame, a display outputting visual information to the window member, a first camera having first resolution, disposed in the frame and photographing the front of the frame, second cameras having second resolution different from the first resolution, disposed on both sides of the frame, respectively, and photographing the front of the frame, and a processor operatively coupled to the first camera and the second cameras. The processor may obtain front image information and movement information of a body of a user by operating the second cameras at a preconfigured frame rate, may identify recognition information including a location and size of an interested object indicated by the body based on the movement information, may identify a photographing area including the interested object based on the recognition information, may obtain interested image information.

## Description

### Technical Field

The disclosure relates to a wearable electronic device including a plurality of cameras.

### Background Art

Augmented reality (AR) may mean a technology in which the reality recognized by a user is represented by adding, to the reality, an element generated through computer graphic processing. For example, an object present in reality may be displayed by adding, to the object, a virtual object including related information of the object by using the AR technology.

AR may be implemented through various devices. Representatively, AR may be implemented through a wearable electronic device, such as a glasses type wearable electronic device or a head mounted display (HMD).

In order to implement AR in the glasses type wearable electronic device of the wearable electronic devices, an image may be displayed on the lenses of glasses. An image may be displayed on the lenses of the glasses by projecting light onto the lenses of the glasses. For example, a projector having a very small size (e.g., a micro projector or a pico projector) may be used. Examples of such a projector may include a laser scanning display (LSD), a digital micro-mirror display (DMD) and liquid crystal on silicon (LCoS). Furthermore, an image may be displayed on the lenses by using a transparent display.

### Disclosure of Invention

### Technical Problem

In order to implement AR, a plurality of cameras may be included in an electronic device. For example, various cameras, such as a camera for photographing the front, a camera for tracking a movement of a specific object, and a camera for photographing an eye of a user, may be included in an electronic device. Such cameras may be disposed at various locations depending on a function or role performed in an electronic device, and performance thereof may also be different.

In an AR environment, a target interested by a user may be determined, and information on the target may be displayed. In order to implement such a function, it is necessary to obtain an image of a target interested by a user. Various pieces of information on the target may be obtained by analyzing the obtained image by using various methods.

Analysis quality of an image may be at least partially determined by quality of an image corresponding to raw data. If an image having good quality is used, smoother image analysis may be possible. In order to obtain an image having high quality, photographing through a high-performance camera may be necessary.

However, power consumed in a process of operating such a high-performance camera may be great. In particular, in a wearable device in which the deployment of a high-capacity battery is limited and whose small size is very important, a real-time operation of an electronic part having great consumption power may be a burden.

Aspects of the disclosure are to address at least the above-mentioned problems and/or disadvantages and to provide at least the advantages described below. Accordingly, an aspect of the disclosure is to provide an electronic device capable of reducing power consumption attributable to an operation of a high-performance camera while obtaining an image having high quality.

### Solution to Problem

In accordance with an aspect of the disclosure, an electronic device is provided. The electronic device includes a frame, a window member supported by the frame, a display module outputting visual information to the window member, a first camera having first resolution, disposed in the frame and photographing the front of the frame, second cameras having second resolution different from the first resolution, disposed on both sides of the frame, respectively, and photographing the front of the frame, and a processor operatively coupled to the first camera and the second cameras. The processor may obtain front image information and movement information of a body of a user by operating the second cameras at a preset frame rate, may identify recognition information including a location and size of an interested object indicated by the body of the user based on the movement information, may identify a photographing area including the interested object based on the recognition information, may obtain interested image information for the photographing area by operating the first camera, may obtain information on the interested object based on the interested image information, and may display the information on the interested object by using the display module.

In accordance with another aspect of the disclosure, an electronic device is provided. The electronic device includes a frame, a window member supported by the frame, a display module outputting visual information to the window member, a first camera having first resolution, disposed in the frame and photographing the front of the frame, a second camera having second resolution different from the first resolution, disposed in the frame at a location different from a location of the first camera, and photographing the front of the frame, and a processor operatively coupled to the first camera and the second camera. The processor may control the first camera in a pixel binning mode in which output resolution of the first camera is changed into resolution different from the first resolution, may obtain front image information and movement information of a body of a user by operating the second camera and the first camera in the pixel binning mode at a preset frame rate, may identify recognition information including a location and size of an interested object indicated by the body of the user based on the movement information, may identify a photographing area including the interested object based on the recognition information, may obtain interested image information for the photographing area by operating the first camera in a basic mode in which output resolution of the first camera is returned to the first resolution, may obtain information on the interested object based on the interested image information, and may display the information on the interested object by using the display module.

### Advantageous Effects of invention

According to various embodiments disclosed in this document, information on a target interested by a user can be more accurately obtained because image analysis is performed using an image having high quality. Furthermore, in obtaining an image having high quality which is used for image analysis, power consumed by an operation of a high-performance camera can be reduced.

### Brief Description of Drawings

The above and other aspects, features, and advantages of certain embodiments of the disclosure will be more apparent from the following description taken in conjunction with the accompanying drawings, in which:
FIG. 1 is a block diagram of an electronic device within a network environment according to an embodiment of the disclosure;
FIG. 2 is a general construction diagram of an electronic device including a plurality of cameras according to an embodiment of the disclosure;
FIG. 3A is a diagram of an electronic device disclosed in this document according to an embodiment of the disclosure;
FIG. 3B is a diagram of the electronic device illustrated in FIG. 3A, which is viewed in a -Y direction in FIG. 3A according to an embodiment of the disclosure;
FIG. 4 is a diagram for describing a method of identifying a movement of a pupil of a user according to an embodiment of the disclosure;
FIG. 5 is a flowchart illustrating an operation of displaying information on an interested object according to an embodiment of the disclosure;
FIGS. 6A, 6B, and 6C are diagrams for describing an operation of identifying a photographing area based on a movement of a body according to various embodiments of the disclosure;
FIGS. 7A, 7B, 7C, and 7D are diagrams for describing an operation of identifying a photographing area based on a movement of a pupil according to various embodiments of the disclosure;
FIG. 8 is a diagram of a control signal applied to a camera according to an embodiment of the disclosure;
FIG. 9A is a perspective view of an electronic device according to an embodiment of the disclosure;
FIG. 9B is a diagram for describing a pixel binning mode of a first camera according to an embodiment of the disclosure;
FIG. 10 is a flowchart of an operation of displaying information on an interested object according to an embodiment of the disclosure; and
FIG. 11 is a diagram for describing one of methods of generating, by a first camera, interested image information of an identified photographing area according to an embodiment of the disclosure.

### Mode for the Invention

It should be appreciated that various embodiments of the disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as " 1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

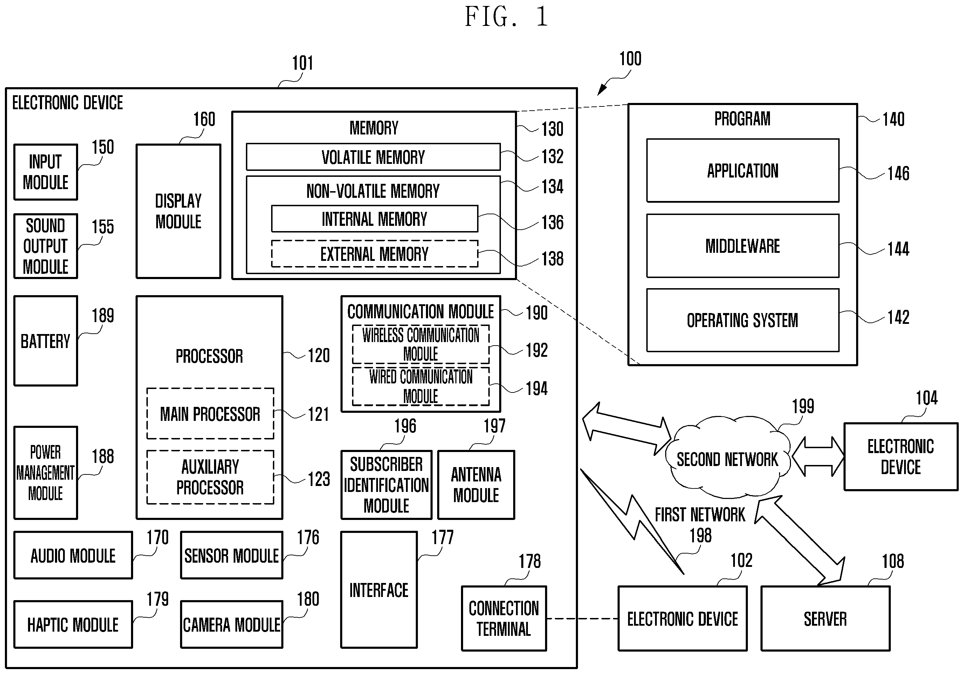

FIG. 1 is a block diagram illustrating an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132, the non-volatile memory 134, the internal memory 136, or the external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

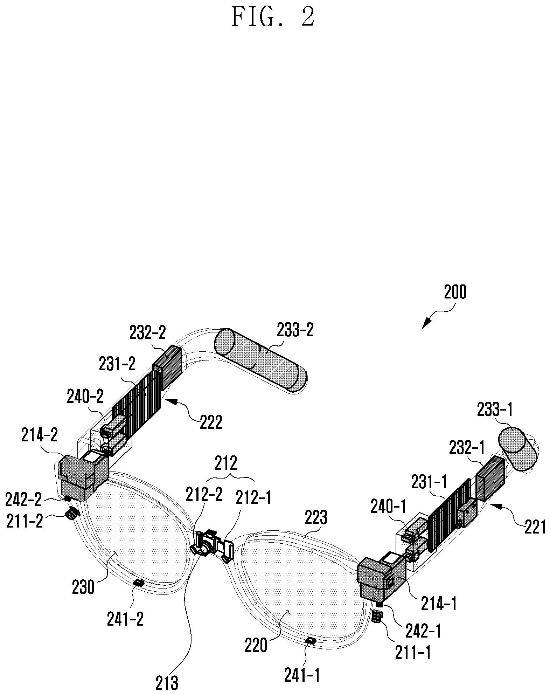

FIG. 2 is a general construction diagram of an electronic device (e.g., an electronic device in FIG. 1) including a plurality of cameras according to an embodiment of the disclosure.

In various embodiments, an electronic device 200 may be an electronic device 200 fabricated in a form worn on a head part of a user. For example, the electronic device 200 may be configured in at least one of forms, such as glasses, goggles, a helmet or a hat, but the disclosure is not limited thereto. According to an embodiment, the electronic device 200 may include a plurality of glasses (e.g., a first glass 220 and/or a second glass 230) corresponding to both eyes (e.g., a left eye and/or right eye) of a user, respectively.

The electronic device 200 may provide a user with an image related to an augmented reality (AR) service. According to an embodiment, the electronic device 200 may enable a user to look at least one virtual object overlapped with reality recognized through the first glass 220 and/or second glass 230 of the electronic device by projecting or displaying the virtual object on the first glass 220 and/or the second glass 230.

Referring to FIG. 2, an electronic device 200 according to an embodiment may include a main body part 223, a support (e.g., a first support 221 and a second support 222), and a hinge part (e.g., a first hinge part 240-1 and a second hinge part 240-2).

According to various embodiments, the main body part 223 and the supports 221 and 222 may be operatively coupled through the hinge parts 240-1 and 240-2. The main body part 223 may include a part formed to be at least partially held in the nose of a user.

According to various embodiments, the support 221, 222 may include a support member having a form hung in the ears of a user. The support 221, 222 may include the first support 221 held in a left ear and/or the second support 222 held in a right ear.

According to various embodiments, the first hinge part 240-1 may connect the first support 221 and the main body part 223 so that the first support 221 is rotatable around the main body part 223. The second hinge part 240-2 may connect the second support 222 and the main body part 223 so that the second support 222 is rotatable around the main body part 223. According to another embodiment, the hinge parts 240-1 and 240-2 of the electronic device 200 may be omitted. For example, the main body part 223 and the supports 221 and 222 may be directly connected to the main body part 223.

According to various embodiments, the main body part 223 may include at least one glass (e.g., the first glass 220 or the second glass 230), at least one display (e.g., a first display 214-1 or a second display 214-2), at least one camera (e.g., a front photographing camera 213), an eye tracking camera module (e.g., a first eye tracking camera module 212-1 and a second eye tracking camera module 212-2), a gesture camera module (e.g., a first gesture camera 211-1 and a second gesture camera 211-2), and at least one microphone (e.g., a first microphone 241-1 or a second microphone 241-2).

In the case of the electronic device 200 described with reference to FIG. 2, light generated by the display 214-1, 214-2 may be projected onto the glass 220, 230, thus displaying information. For example, light generated by the first display 214-1 may be projected onto the first glass 220. Light generated by the second display 214-2 may be projected onto the second glass 230. Since light capable of displaying a virtual object is projected onto the glass 220, 230 having at least a part thereof made of a transparent material, a user can recognize reality overlapped with the virtual object. In this case, the display 160 described with reference to FIG. 1 may be understood to include at least a part of the display 214-1, 214-2 and the glass 220, 230 in the electronic device 200 illustrated in FIG. 2. However, an electronic device described in the disclosure is not limited to displaying information through the aforementioned method. A display which may be included in an electronic device may be changed into displays including information display methods using various methods. For example, if a display panel including an illumination LED made of a transparent material is embedded in the glass 220, 230, information may be displayed without a separate display (e.g., the first display 214-1 or the second display 214-2). In this case, the display 160 described with reference to FIG. 1 may mean the glass 220, 230 and a display panel included in the glass.

According to various embodiments, a virtual object outputted through the display 214-1, 214-2 may include information related to an application program executed in the electronic device 200 and/or information related to an external object recognized by a user through the glass 220, 230 and placed in an actual space. The external object may include a thing present in the actual space. An actual space recognized by a user through the glass 220, 230 is hereinafter referred to as a "field of view (FOV) area" of the user. For example, the electronic device 200 may identify an external object, included in at least a part of an area identified as an FOV of a user, in image information related to an actual space obtained through a camera (e.g., the front photographing camera 213) of the electronic device 200. The electronic device 200 may output, through the display 214-1, 214-2, a virtual object related to the identified external object.

According to various embodiments, the electronic device 200 may also display a virtual object related to an AR service based on image information related to an actual space obtained through the front photographing camera 213 of the electronic device 200. According to an embodiment, the electronic device 200 may display a virtual object through displays (e.g., the first display 214-1 corresponding to a left eye and/or the second display 214-2 corresponding to a right eye) disposed in accordance with both eyes of a user. According to an embodiment, the electronic device 200 may display a virtual object based on preset configuration information (e.g., resolution, a frame rate, brightness and/or a display area).

According to various embodiments, the glass 220, 230 may include a condensing lens (not illustrated) and/or a waveguide (not illustrated). For example, the first waveguide may be partially disposed in the first glass 220, and the second waveguide may be partially disposed in the second glass 230. Light emitted from the display 214-1, 214-2 may be incident on one surface of the glass 220, 230. The light incident on the one surface of the glass 220, 230 may be delivered to a user through the waveguide disposed in the glass 220, 230. The waveguide may be fabricated using glass, plastic or polymer, and may include a nano pattern formed on one surface of the inside or outside thereof. For example, the nano pattern may include a grating structure having a polygon or a curved surface shape. According to an embodiment, light incident on one surface of the glass 220, 230 may be propagated or reflected within the waveguide by the nano pattern and delivered to a user. According to an embodiment, the waveguide may include at least one of at least one diffraction element (e.g., a diffractive optical element (DOE) or a holographic optical element (HOE)) or a reflection element (e.g., a reflection mirror). According to an embodiment, the waveguides may induce, into an eye of a user, light emitted from the display 214-1, 214-2 by using at least one diffraction element or a reflection element.

According to various embodiments, the electronic device 200 may include the front photographing camera 213 (e.g., an RGB camera) for capturing an image corresponding to an FOV of user and/or measuring a distance from an object, the eye tracking camera module 212-1, 212-2 for identifying the direction of a gaze seen by a user and/or the gesture camera module 211-1, 211-2 for recognizing a given space. For example, the front photographing camera 213 may photograph the front direction of the electronic device 200. The eye tracking camera module 212-1, 212-2 may photograph a direction opposite to a photographing direction of the front photographing camera 213. For example, the first eye tracking camera module 212-1 may partially photograph the left eye of a user, and the second eye tracking camera module 212-2 may partially photograph the right eye of the user. According to an embodiment, the front photographing camera 213 may include a high-resolution camera, such as a high resolution (HR) camera and/or a photo video (PV) camera. According to an embodiment, the eye tracking camera module 212-1, 212-2 may track the direction of a gaze by detecting a pupil of a user. The tracked direction of the gaze may be used for the center of a virtual image including a virtual object to be moved in accordance with the direction of the gaze. According to an embodiment, the gesture camera module 211-1, 211-2 may detect a user gesture and/or a given space within a preset distance (e.g., a given space). The gesture camera module 211-1, 211-2 may include a camera including a global shutter (GS). For example, the gesture camera module 211-1, 211-2 may be a camera including a GS which may have a reduced rolling shutter (RS) phenomenon in order to detect or track a fine movement, such as a fast hand movement and/or finger.

According to various embodiments, the electronic device 200 may detect an eye corresponding to a fixating eye and/or an auxiliary eye among a left eye and/or a right eye by using the at least one camera 211-1, 211-2, 212-1, 212-2, and 213. For example, the electronic device 200 may detect an eye corresponding to a fixating eye and/or an auxiliary eye based on a direction of a gaze of a user with respect to an external object or a virtual object.

The number and locations of at least one camera (e.g., the front photographing camera 213, the eye tracking camera module 212-1, 212-2 and/or the gesture camera module 211-1, 211-2) included in the electronic device 200 illustrated in FIG. 2 may not be limited. For example, the number and locations of at least one camera (e.g., the front photographing camera 213, the eye tracking camera module 212-1, 212-2 and/or the gesture camera module 211-1, 211-2) may be variously changed based on a shape (e.g., a form or a size) of the electronic device 200.

According to various embodiments, the electronic device 200 may include at least one illumination LED (e.g., a first illumination LED 242-1 or a second illumination LED 242-2) for increasing the accuracy of at least one camera (e.g., the front photographing camera 213, the eye tracking camera module 212-1, 212-2 and/or the gesture camera module 211-1, 211-2). For example, the first illumination LED 242-1 may be disposed in a part corresponding to the left eye of a user, and the second illumination LED 242-2 may be disposed in a part corresponding to the right eye of the user. In an embodiment, the illumination LED 242-1, 242-2 may be used as auxiliary means for increasing accuracy when a pupil of a user is photographed by the eye tracking camera module 212-1, 212-2, and may include an IR LED for generating light having an infrared wavelength. Furthermore, the illumination LED 242-1, 242-2 may be used as auxiliary means when a subject to be photographed is not easily detected due to a dark environment when a gesture of a user is photographed by the gesture camera module 211-1, 211-2 or the mixing of several light sources and reflected light.

According to various embodiments, the electronic device 101 may include a microphone (e.g., the first microphone 241-1 or the second microphone 241-2) for receiving a user's voice and a surrounding sound. For example, the microphone 241-1, 241-2 may be an element included in the audio module 170 in FIG. 1.

According to various embodiments, the first support 221 and/or the second support 222 may include a printed circuit board (PCB) (e.g., a first PCB 231-1 or a second PCB 231-2), a speaker (e.g., a first speaker 232-1 or a second speaker 232-2) and/or a battery (e.g., a first battery 233-1 or a second battery 233-2).

According to various embodiments, the speakers 232-1 and 232-2 may include the first speaker 232-1 for delivering an audio signal to the left ear of a user and the second speaker 232-2 for delivering an audio signal to the right ear of the user. The speakers 232-1 and 232-2 may be elements included in the audio module 170 in FIG. 1.

According to various embodiments, the electronic device 200 may include the plurality of batteries 233-1 and 233-2, and may supply power to the PCBs 231-1 and 231-2 through a power management module (e.g., the power management module 188 in FIG. 1). For example, the plurality of batteries 233-1 and 233-2 may be electrically connected to a power management module (e.g., the power management module 188 in FIG. 1).

The electronic device 200 has been described as being a device for displaying AR, but may be a device for displaying virtual reality (VR). In this case, the glass 220, 230 may be made of an opaque material so that a user cannot recognize an actual space through the glass 220, 230. Furthermore, the glass 230 may function as the display 160. For example, the glass 220, 230 may include a display panel for displaying information.

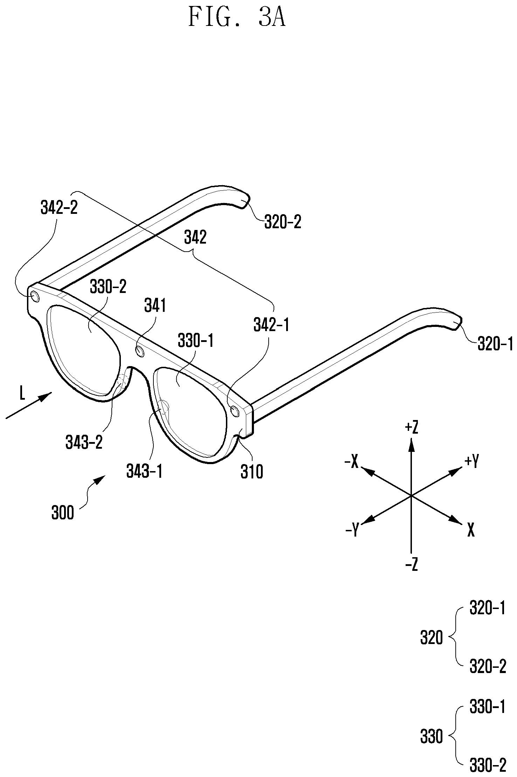

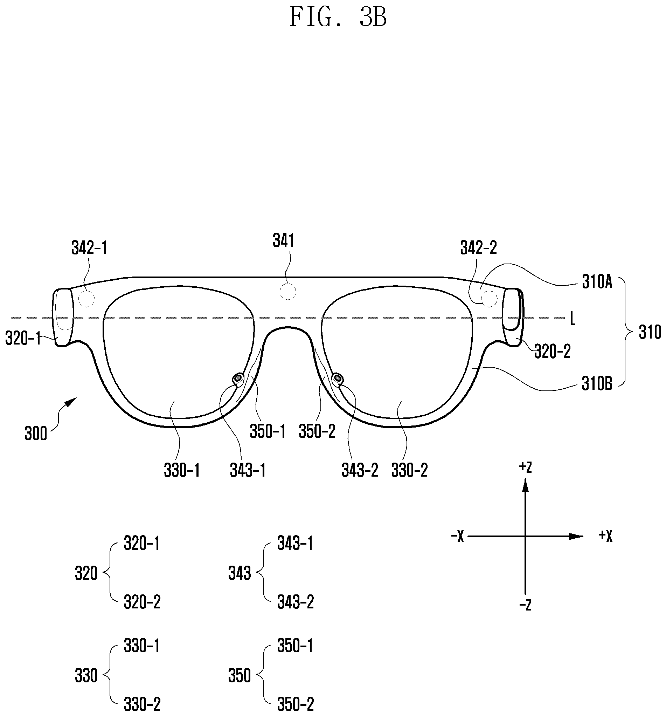

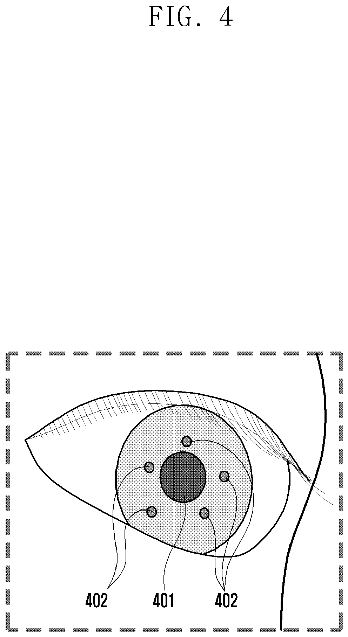

FIG. 3A is a diagram of an electronic device according to an embodiment of the disclosure. FIG. 3B is a diagram of an electronic device illustrated in FIG. 3A, which is viewed in a -Y direction in FIG. 3A according to an embodiment of the disclosure. FIG. 4 is a diagram for describing a method of identifying a movement of a pupil of a user according to an embodiment of the disclosure.

An electronic device 300 described hereinafter may be an electronic device 300 including at least one of the elements included in the electronic devices 101 and 200 described with reference to FIGS. 1 and 2. Although not mentioned in the following description, an electronic device disclosed in this document may be interpreted as being capable of including various elements described with reference to FIGS. 1 and 2.

According to various embodiments, the electronic device 300 may include a frame 310 (e.g., the main body part 223 in FIG. 2), a window member 330 (e.g., the first glass 220 and the second glass 230 in FIG. 2), a support member 320 (e.g., the first support 221 and the second support 222 in FIG. 2), a display (not illustrated) (e.g., the display 160 in FIG. 1), a first camera 341 (e.g., the front photographing camera 213 in FIG. 2), a second camera 342 (e.g., the gesture camera module 211-1, 211-2 in FIG. 2), a third camera 343 (e.g., the eye tracking camera module 212-1, 212-2 in FIG. 2, an illumination unit (not illustrated) (e.g., the illumination LED 242-1, 242-2 in FIG. 2), and a processor (not illustrated) (e.g., the processor 120 in FIG. 1).

In this case, the first camera 341, the second camera 342, and the third camera 343 may be classified by various elements, such as a photographing direction, location, performance and function of each camera. However, although the name of each cameras is different, the first camera 341, the second camera 342, and the third camera 343 may be constructed as camera modules having the same specifications.

In an embodiment, each of the window member 330, the support member 320, and the display may be prepared as a pair in a way to correspond to the left eye and right eye of a user. For example, the window member 330 may include the first window member 330-1 and the second window member 330-2, and the support member 320 may include the first support member 320-1 and the second support member 320-2. In some cases, in some of the aforementioned elements, a construction corresponding to the left eye and a construction corresponding to the right eye may be different.

Hereinafter, the electronic device 300 has been illustrated as being a glasses-type electronic device in drawings, for convenience of description, but technical spirit disclosed in this document may be applied to an electronic device including a display and including various types of head mounted displays (HMDs) which may be mounted on a head part of a user.

According to various embodiments, the frame 310 may support the window member 330. The frame 310 may be made of a synthetic resin material. As the window member 330 is inserted into a slit formed in the frame 310, the frame 310 may support the window member 330.

According to various embodiments, the support member 320 may be connected to the frame 310 in a way to be rotatable. The support member 320 may include the first support member 320-1 and the second support member 320-2. The first support member 320-1 may be connected to the frame 310 on the left (e.g., a -X direction in FIG. 3A) of the frame 310. The second support member 320-2 may be connected to the frame 310 on the right (e.g., a +X direction in FIG. 3A) of the frame 310. In an embodiment, the support member 320 may be fixed and installed in the frame. For example, the first support member 320-1 connected to the left of the frame 310 and the second support member 320-2 connected to the right of the frame 310 may be formed to be connected. The support members connected to both sides of the frame 310 may form a ring shape, and may be worn in a way to be inserted into the head of a user. In addition, the support member 320 may be changed into various forms in which the electronic device 300 can be worn on the face of a user.

According to various embodiments, as illustrated in FIG. 3A, the support member 320 may be formed to be hung on the ears of a user. The electronic device 300 may be worn on the face of a user in a way that the support member 320 connected to the frame 310 is hung on the ears of the user. The support member 320 may rotate around the frame 310. The volume of the electronic device 300 can be reduced because the support member 320 is rotated in a direction in which the support member 320 approaches the frame 310.

According to various embodiments, the window member 330 may include the first window member 330-1 corresponding to the left eye of a user and the second window member 330-2 corresponding to the right eye of the user. The window member 330 may be supported by the frame 310. For example, the window member 330 may be inserted into a slit formed in the frame 310. An AR image outputted by the display may be projected onto the window member 330. A waveguide (e.g., the first waveguide and/or the second waveguide) may be formed in at least some area of the window member 330. The waveguide may induce, into an eye of a user, an AR image outputted by the display. For a detailed description of the waveguide, reference is made to the description related to the first glass 220 and the second glass 230 in FIG. 2.

According to various embodiments, the display may output an AR image generated by a processor. When the display generates and projects an AR image onto the window member 330, an object included in the AR image is combined with visible light L incident from the front (e.g., the -Y direction in FIG. 3B) through the window member 330, so that AR may be implemented. The display may be a projector having a very small size (e.g., a micro projector or a pico projector). For example, the display may be a laser scanning display (LSD), a digital micro-mirror display (DMD) or liquid crystal on silicon (LCoS). Furthermore, the display may be a transparent display. In this case, an illumination LED included in the display may be disposed in the window member 330. In addition, the display may be various display devices for implementing AR.

According to various embodiments, the first camera 341 may be disposed in the frame 310 in a way to photograph the front of the frame 310. For example, the first camera 341 may be disposed in the frame 310 so that the front of the frame 310 is included within an FOV supported by the first camera 341. For example, the FOV supported by the first camera 341 may be a standard FOV (e.g., 50 mm) or a wide FOV (e.g., 24 mm to 35 mm), but is not limited thereto. The front of the frame 310 may mean a direction seen by a user when the user wears the electronic device. For example, the -Y direction in FIG. 3A may be considered as the front of the frame 310. In an embodiment, the first camera 341 may be disposed in a central part of the frame 310. In an embodiment, the first camera 341 may include an electronic shutter. In order to suppress a rolling shutter or jello effect phenomenon, an electronic shutter of the first camera 341 may be a global shutter. In an embodiment, the first camera 341 may include an image sensor capable of outputting an image having relatively higher resolution than another camera (e.g., the second camera 342 or the third camera 343) included in the electronic device. For example, the first camera 341 may support resolution (e.g., 2104 × 1560 resolution) of 2000 pixels or more, and each of the second camera 342 and the third camera 343 may support resolution (e.g., 1280 x 960 resolution or 320 × 240 resolution) smaller than the resolution (e.g., 2104 x 1560 resolution), but the disclosure is not limited thereto. Alternatively, in an embodiment, the size of the image sensor of the first camera 341 may be greater than that of the image sensor of each of the second camera 342 and the third camera 343. Alternatively, optical performance of a lens included in the first camera 341 may be better than that of a lens included in each of the second camera 342 and the third camera 343.

According to various embodiments, like the first camera 341, the second camera 342 may be disposed in the frame 310 in a way to photograph the front of the frame 310, but the disclosure is not limited thereto. For example, if at least a part of an FOV supported by the first camera 341 and at least a part of an FOV supported by the second camera 342 correspond to an overlapped location, a location of the second camera is not limited. For example, an overlapped FOV may include the front (e.g., the -Y direction). In an embodiment, the second camera 342 may be constructed in plural, and may be disposed in the frame 310 at different locations. For example, as illustrated in FIG. 3A, the second camera 342 may be disposed on both sides (e.g., the second camera 342-1 disposed in the +X direction in FIG. 3A and the second camera 342-2 disposed in the -X direction in FIG. 3A) of the frame 310. A stereoscopic shape of an object included in an image may be inferred based on a difference in the depth of field (DOF) between images obtained by the second camera 342 disposed at different locations. In addition, there may be various methods of obtaining information of an object included in an image based on a phase difference between images photographed at different locations. An electronic device according to various embodiments disclosed in this document may include various methods of obtaining object information, which may be easily applied by a person skilled in the art. In an embodiment, the second camera 342 may be configured to have an FOV close to the FOV of an eye of a user. For example, the second camera 342 may be a camera having an FOV of about 50 mm on the basis of a 35 mm image sensor (e.g., full-frame image sensor). The aforementioned contents related to the specification of the second camera 342 are merely illustrative, and may be variously modified.

According to various embodiments, the third camera 343 may be disposed in the frame 310 in a way to photograph the rear of the frame 310. In this case, the rear may be understood as a +Y direction in FIG. 3A. The third camera 343 may be disposed at a location where the rear of the frame 310 can be photographed unlike the first camera 341 and the second camera 342 disposed to photograph the front of the frame 310. The face of a user is disposed at the rear of the frame 310 in the state in which the user has worn the electronic device. Accordingly, the third camera 343 may photograph a facial part of the user. The third camera 343 may include the plurality of cameras 343-1 and 343-2 in a way to photograph the left eyeball and right eyeball of a user.

In an embodiment, the third camera 343 may be disposed in the frame 310 in a way to photograph an eye of a user. Referring to FIG. 3B, the third camera 343 may be disposed on the lower side of the frame 310 so that interference attributable to an eyebrow or eyelashes of a user does not occur when the third camera 343 photographs an eye of the user. As illustrated in FIG. 3B, if the frame 310 is divided into a first area 310A and a second area 310B, the third camera 343 may be disposed in the second area 310B of the frame 310. The second area 310B of the frame 310 may be an area close to the nose of a user in the state in which the user has worn the electronic device 300. For example, as illustrated in FIG. 3B, an area extended in a first direction (e.g., a -Z direction in FIG. 3B) on the basis of a virtual line L crossing the frame 310 may be understood as the second area 310B. Alternatively, the second area 310B may be understood as an area disposed on the lower side with respect to a gaze direction in which a user gazes the front. In an embodiment, the third camera 343 may be disposed of adjacent to a mounting support part 350 supported by a user's body (e.g., a nose). The mounting support part 350 may include a first mounting support part 350-1 located to the left side (e.g., a -X direction of FIG. 3B) of the frame 310 and a second mounting support part 350-2 located to the right side (e.g., a +X direction of FIG. 3B) of the frame 310. The third camera 343 disposed in the second area 310B of the frame 310 may photograph an eye of a user under the eye of the user. The first area 310A of the frame 310 may mean the remaining area of the frame 310 except the second area 310B. For example, as illustrated in FIG. 3B, an area extended in a second direction (e.g., a +Z direction in FIG. 3B) on the basis of the virtual line L crossing the frame 310 may be understood as the first area 310A.

In an embodiment, the third camera 343 may include an infrared (IR) camera. For example, the electronic device 300 may include an illumination unit (not illustrated) (e.g., the illumination LED 242-1, 242-2 in FIG. 2). The illumination unit may include an infrared LED. The third camera 343 may capture an image of light which is generated by the illumination unit and reflected or projected onto a pupil of a user.

In an embodiment, a movement of a pupil of a user may be identified using an image captured by the third camera 343. For example, a movement of a pupil may be identified by identifying a ratio of the pupil of an eye and the white of the eye. For another example, a movement of a pupil may be identified with the help of the illumination unit. Referring to FIG. 4, a movement of a pupil 401 may be tracked based on a relative distance between the pupil 401 and an emitting point 402 projected onto an eye of a user. The emitting point 402 may mean a point at which light generated by the illumination unit is projected onto an eye of a user. If a change in the relative distance between a plurality of emitting points 402 and the pupil 401 is used, a movement of the pupil 401 can be tracked. According to an embodiment, the illumination unit may radiate, to an eye of a user, infrared rays having various forms through at least one illumination LED based on a designated pattern or a designated order. In addition, a movement of a pupil of a user may be identified in various ways based on an image obtained through the third camera 343 disposed to photograph an eye of a user.

According to various embodiments, the first camera 341 may be a camera having better performance (e.g., resolution, the size of an image sensor, or optical performance) than the second camera 342 and the third camera 343. For this reason, consumption power of the first camera 341 may be relatively greater than consumption power of the second camera 342 or the third camera 343. The first camera 341 may be set to operate in a standby mode (or a deactivation state). According to an embodiment, each of the second camera 342 and the third camera 343 may have lower power consumption than the first camera 341, and may be always set in order to recognize a movement of a body (e.g., an eye, a finger or the head) of a user and/or a space may be set to have an activation time (or period) longer than the time when the first camera 341 is activated.

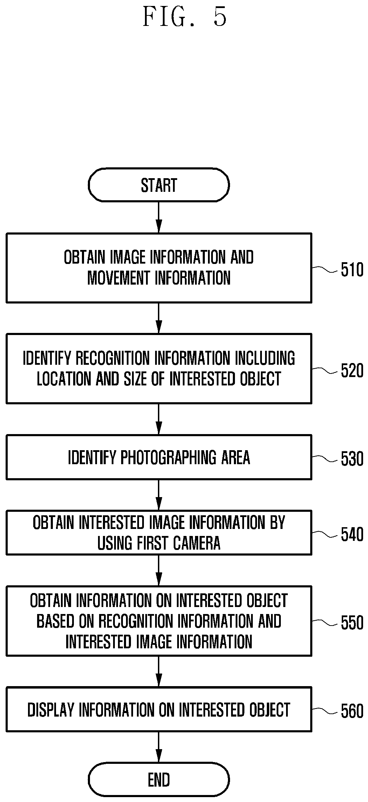

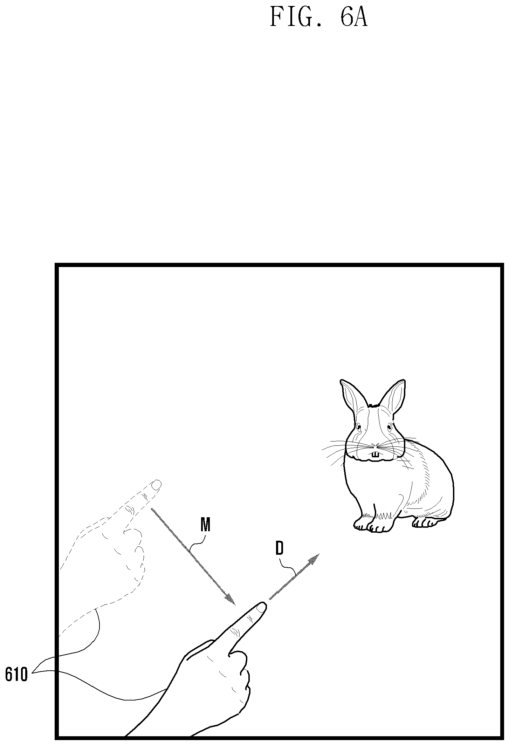

FIG. 5 is a flowchart illustrating an operation of displaying information on an interested object according to an embodiment of the disclosure. FIGS. 6A to 6C are diagrams for describing an operation of identifying a photographing area based on a movement of a body according to various embodiments of the disclosure.

Hereinafter, description is given by using the same reference numerals for elements identical with or similar to the elements described with reference to FIGS. 3A and 3B. Hereinafter, operations whose subject is a processor may mean an operation of controlling, by a processor (e.g., the processor 120 in FIG. 1) of an electronic device, a camera by transmitting a control signal to the camera. Furthermore, the processor may transmit a control signal to an image processor included in an image sensor. The image processor may substantially control the image sensor and the camera. Such a control operation is also hereinafter described as being performed by the processor, for convenience of description.

According to various embodiments, a processor (e.g., the processor 120 in FIG. 1) may obtain front image information and movement information at operation 510). For example, the processor may obtain the front image information and the movement information by using the second camera 342.

According to various embodiments, a processor (e.g., the processor 120 in FIG. 1) may perform photographing based on an FOV supported by the second camera 342 by operating the second camera 342 at a configured control numerical value. For example, the second camera 342 may be controlled to generate the front image information by photographing the front of the frame 310. The front image information may include an image received through the image sensor of the second camera 342. For example, the front image information may include a raw image received through the image sensor or a preprocessed (e.g., color calibration or noise cancelling) image. In this case, the configured control numerical value may include an iris value (or an F value), shutter speed, ISO and frame rate of the camera. In an embodiment, the aforementioned control numerical value may be adaptively adjusted so that photographing is performed at a proper exposure value determined by an exposure system included in the camera. The processor may control the second camera 342 to generate front image information in real time (or every designated period). For example, the second camera 342 may continuously photograph the front at a frame rate of 24 fps, 30 fps or 60 fps. For example, if the second camera 342 has been set to be always activated, while the electronic device 300 is activated (e.g., while power is supplied), the second camera 342 may maintain an activated state. While activated, the second camera 342 may perform photographing at a configured frame rate. For another example, if the second camera 342 has been configured to have an activation state and a deactivation state, the second camera 342 may perform photographing at a configured frame rate during the activation state set longer than the activation state of the first camera 341. For example, even in the state in which the first camera 341 has been deactivated, the second camera 342 may perform photographing. The processor may obtain the front image information generated by the second camera 342 at operation 510.

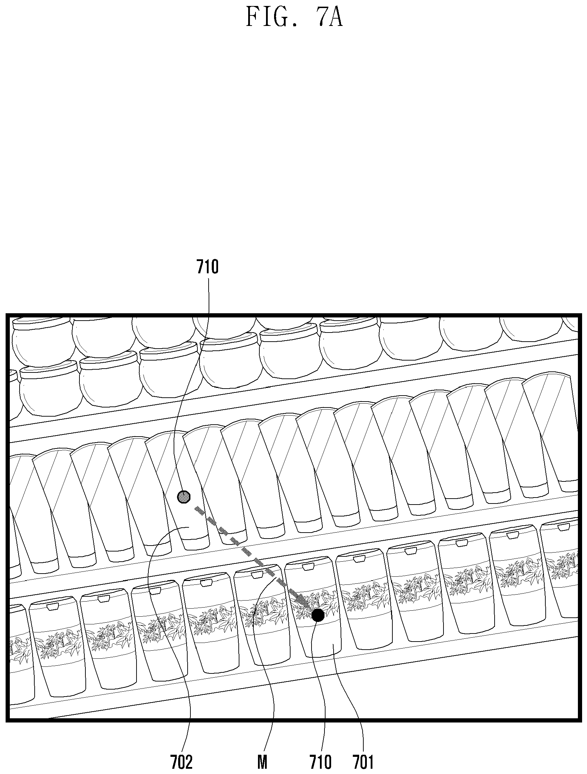

According to various embodiments, the processor may obtain movement information. According to an embodiment, the processor may obtain the movement information by using the second camera 342. For example, the second camera 342 may detect a movement of a body of a user. In an example, the body of the user may be a finger 610 of the user. The processor may divide the body of the user based on front image information obtained through the second camera 342, and may track a movement of the body. The finger is merely an example. The processor may track a movement of the body of the user by recognizing the body included in the front image information. Movement information M of the body of the user may be obtained in various ways. For example, the processor may select a specific image in the front image information. The processor may extract and store reference information (e.g., color information, or light and shade information) of a characteristic part (e.g., a finger) by analyzing the selected image. Thereafter, the processor may use a method of tracking an area coincident with the reference information within a designated range in front image information received in real time. In addition, the processor may obtain the movement information M of the body of the user by using the second camera 342 in various ways. According to an embodiment, the processor may obtain the movement information by using the third camera 343. For example, the processor may obtain, as the movement information, a movement of a gaze of a user according to a movement of a pupil of the user identified through the third camera 343, and a detailed embodiment thereof is described with reference to FIGS. 7A to 7D at operation 510.

According to various embodiments, a processor (e.g., the processor 120 in FIG. 1) may identify recognition information including a location and size of an interested object at operation 520.

According to various embodiments, the processor may identify an object 601 supported by a body (e.g., a finger or a pupil) of a user based on the movement information M. As described above, the object indicated by the body of the user may be called an "interested object 601." For example, the object 601 present in a direction D indicated by the finger 610 of the user may be recognized as the interested object 601. The processor may identify recognition information including a location and size of the interested object 601. The location of the interested object 601 may be a specific point (e.g., a point of interest (POI)) or a specific area (e.g., a region of interest (ROI)). In this case, the location may mean the area of a pixel or the coordinates of a pixel in which an image corresponding to the interested object 601 in an image sensor of a camera is obtained.

The size of the interested object may be defined as an area including a location occupied by an extracted contour line of the interested object 601. For example, the processor may extract the contour line by convoluting a front image. Alternatively, the processor may extract the contour line by using a histogram, that is, exposure information of the front image. In addition, the processor may identify the recognition information including the location and size of the interested object 601 in various ways at operation 520.

According to various embodiments, the processor may identify a photographing area 620 including the interested object 601 based on the recognition information at operation 530.

As described above, the location of the interested object 601 included in the recognition information may be understood as the area of a pixel or the coordinates of a pixel in which an image corresponding to the interested object 601 in an image sensor of the camera is obtained.

Furthermore, the size of the interested object 601 is an area including a location occupied by the contour line of the interested object 601, and thus may also be understood as the coordinates of a pixel included in the image sensor. The processor may identify the photographing area 620 where the interested object 601 may be photographed based on such recognition information. For example, the processor may identify, as the photographing area 620, coordinate information of a pixel of the image sensor in which image information corresponding to the interested object 601 may be obtained.

According to various embodiments, the processor may obtain interested image information 630 for the photographing area 620 by operating the first camera 341 at operation 540.

First resolution, that is, resolution of the first camera 341, may be higher than second resolution, that is, resolution of the second camera 342. Furthermore, overall performance of the first camera 341 may be higher than performance of the second camera 342. Accordingly, an image captured by the first camera 341 may be a high-quality image having higher resolution than an image captured by the second camera 342. More effective image analysis of the interested object 601 may be possible because the interested image information 630 including the interested object 601 is obtained using the first camera 341, that is, a camera having higher performance than the second camera 342.

According to various embodiments, obtaining the interested image information may be performed in various ways. In an embodiment, the processor may obtain the interested image information 630 by cropping an area corresponding to a photographing area in an image captured by the first camera 341. In another embodiment, the processor may obtain the interested image information 630 by scanning a pixel in an image sensor of the first camera 341 corresponding to the photographing area 620.

As described above, the photographing area 620 may be understood as coordinate information of a pixel that constitutes an image sensor capable of photographing an image corresponding to the interested object 601 or an area including the interested object 601. Since relative locations of cameras (e.g., the first camera 341 and the second camera 342) are determined in the electronic device 300, a distance (e.g., a baseline) between the cameras can be aware. Furthermore, internal information (e.g., an FOV or a focal distance) of the cameras included in the electronic device 300 may be identified. If internal information of each camera and a distance between the cameras are used, the coordinates of a pixel corresponding to the photographing area 620 identified by the photographing of another camera may be identified.

For example, specific pixels of the image sensor of the first camera 341 may correspond to the photographing area 620 identified through the second camera 342. Pixels in an image sensor of the first camera 341 corresponding to the photographing area 620 may be identified using internal information of cameras and a distance between the cameras.

After a pixel of the image sensor of the first camera 341 corresponding to the photographing area 620 is identified, the interested image information 630 including the interested object 601 may be obtained through the first camera 341 by performing scanning so that a pixel corresponding to the photographing area 620 is included in order to obtain image information corresponding to the photographing area 620.

The aforementioned operation may be understood as an operation of matching the photographing area 620 with the image sensor of the first camera 341. The processor may match, with the image sensor of the first camera 341, the photographing area 620 identified based on an image captured by the second camera 342, and may obtain the interested image information 630 by using the matched part.

As described above, if the interested image information 630 is generated using only a specific pixel without obtaining the interested image information 630 using all pixels included in the image sensor, consumption power taken to read (or scan) all the pixels can be reduced. Furthermore, computing power necessary when a high-resolution image is processed can be reduced. In particular, the first camera 341 may be a camera having higher performance than the second camera 342. The first camera 341 corresponding to a high-performance camera may use more power than the second camera 342 when the second camera 342 is driven. If only some of pixels included in the image sensor of the first camera 341 are used, the use time of an electronic device can be increased because power consumption of the first camera 341, that is, a high-performance camera, is reduced.

According to various embodiments, the processor may obtain information on the interested object 601 based on the recognition information and the interested image information at operation 550.

The processor may identify information on a shape of the interested object 601 based on the recognition information, and may identify a high-resolution image of the interested object 601 based on the interested image information 630. The processor may obtain the information on the interested object 601 by performing image analysis on a photographed image of the interested object 601 in various ways based on the recognition information and the interested image information 630.

According to various embodiments, the processor may display the information on the interested object 601 by using the display at operation 560.

For example, the information on the interested object 601 may include a name, size (e.g., a length, an area or a volume), price, state and/or other related information of the interested object 601. If an electronic device is an electronic device that displays AR, the electronic device may project a visual user interface (UI) onto the window member so that information on an interested object is displayed around an actual object. For a description related to projecting visual information onto the window member through the display, reference is made to the description related to the display in FIG. 2.

FIGS. 7A to 7D are diagrams for describing an operation of identifying a photographing area based on a movement of a pupil according to various embodiments of the disclosure.

Unlike in the method illustrated in FIGS. 6A to 6C, in a method illustrated referring to FIGS. 7A to 7D, an interested object 701 may be set and a photographing area 720 may be identified by further using a movement of an eye of a user. Hereinafter, a difference between the method illustrated in FIGS. 6A to 6C and the method illustrated in FIGS. 7A to 7D is chiefly described, and a detailed description of the same or similar operation is omitted.

According to various embodiments, the processor may obtain front image information by using the second camera 342, and may obtain movement information by using the third camera 343 at operation 510. In this case, the movement information may include a movement of a gaze of a user according to a movement of a pupil of the user identified through the third camera 343.

As described above with reference to FIG. 3B, the third camera 343 may be a camera disposed in the frame 310 so that the camera can photograph an eye of a user. As in the description given with reference to FIG. 4, a movement of a pupil of a user may be identified based on an image captured by the third camera 343. The processor may generate gaze information 710 including a direction toward which a gaze of the user is directed based on the movement of the pupil of the user. If the gaze information 710 is used, what object does the user gaze at can be identified.

According to various embodiments, the processor may identify recognition information including a location and size of the interested object at operation 520.

The processor may identify the interested object 701 based on the gaze information 710 corresponding to the movement of the pupil of the user identified through the third camera 343. For example, if the gaze information 710 is paused for a preset time, the processor may identify, as the interested object 701, an object overlapped with the gaze information 710.

According to various embodiments, the processor may identify the interested object 701 by mapping the gaze information 710 to front image information obtained through the second camera 342. The processor may identify the interested object 701 by mapping the gaze information 710 to the second camera 342. For example, as illustrated in FIG. 7A, although the same area is photographed, an interested object may be different depending on a movement M of a gaze identified by a movement of a pupil. For example, as illustrated in FIG. 7A, an interested object may be changed from a second interested object 702 to a first interested object 701 in response to a movement M of a gaze.

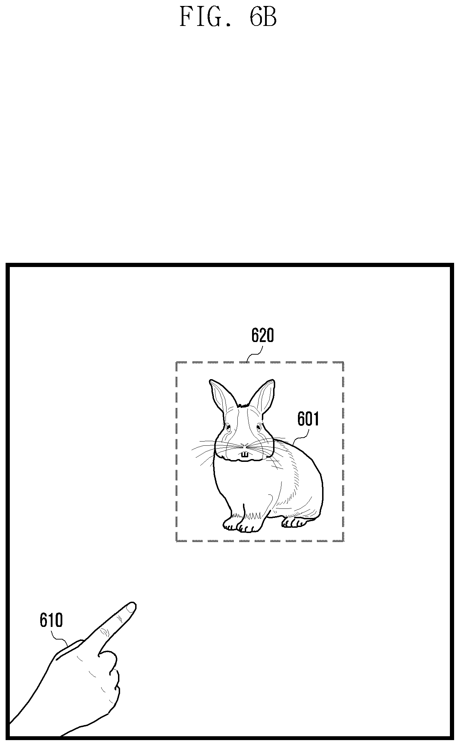

When the interested object 701 is determined, the processor may identify recognition information including the location and size of the interested object 701. An operation of identifying the location and size of the interested object 701 is similar to that described above with reference to FIGS. 6A and 6B, and thus a detailed description thereof is omitted.

According to various embodiments, the processor may identify the photographing area 720 based on the recognition information of the interested object 701 at operation 530.

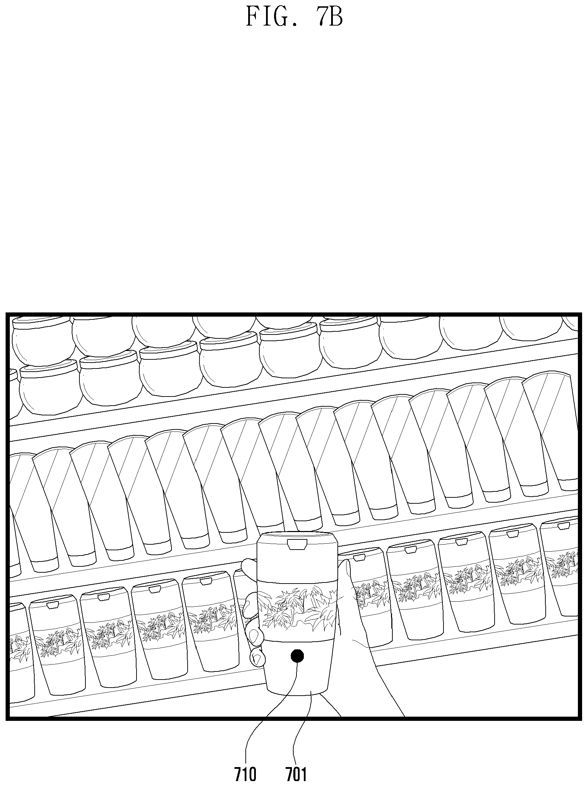

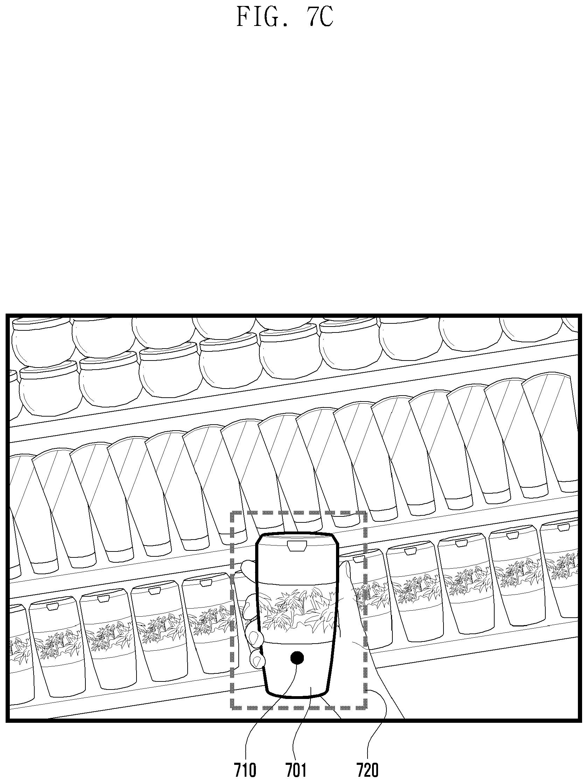

As illustrated in FIG. 7B, when the interested object 701 at which the user gazes is identified, the processor may identify the photographing area 720 based on the location and size of the interested object 701 as illustrated in FIG. 7C at operation 530. Next, the processor may obtain interested image information on the photographing area 720 by operating the first camera 341 at operation 540. For an operation of identifying the photographing area 720 and obtaining the interested image information through the first camera 341 based on the photographing area 720, reference is made to the description given with reference to FIGS. 6A and 6B.

According to various embodiments, a photographing area may be identified through the method described above with reference to FIGS. 6A to 6C by using only the second camera 342. Furthermore, a photographing area may be identified through the method described above with reference to FIGS. 7A to 7D by further using the third camera 343.

According to various embodiments, the processor may obtain information on the interested object 701 based on the recognition information and the interested image information at operation 550. Next, the processor may display the information on the interested object 701 by using the display at operation 560.

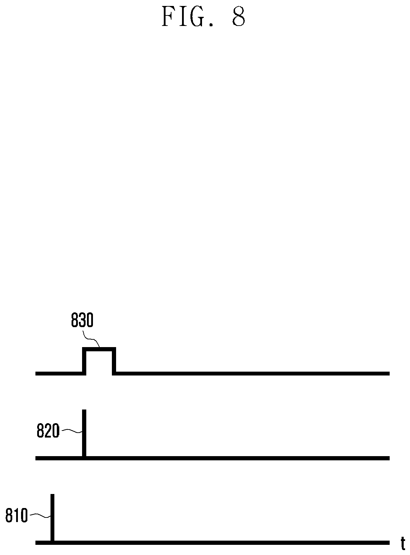

FIG. 8 is a diagram of a control signal applied to a camera according to an embodiment of the disclosure.

According to various embodiments, the processor may transmit, to a camera, a camera control signal 810 that controls the camera based on a photographing target and a surrounding state. For example, an iris value, a shutter speed, or an ISO value may be included in the camera control signal 810. Furthermore, the camera control signal 810 may include at least some of the number of frames of an image to be outputted through the camera, a frame output speed, an output image size, a gain, etc.

According to various embodiments, the processor may further consider consumption power according to an operation of the first camera 341 in obtaining interested image information by operating the first camera 341.

For example, as illustrated in FIG. 8, the processor may operate the first camera 341 based on a recognition trigger 820. A mode of the first camera 341 may be maintained in a standby mode until the recognition trigger 820 is received. The standby mode may mean a mode in which the first camera 341 has been deactivated. The standby mode may mean the state in which power is not delivered to the first camera 341 or only basic power capable of directly activating the first camera 341 is delivered to the first camera 341.

According to various embodiments, the recognition trigger 820 may include various inputs. For example, an input through separate input means (e.g., a touch input device, a physical input device, or a sound input device (e.g., a microphone)) included in an electronic device may be used as the recognition trigger 820. Furthermore, a case where a body of a user is paused within a preset range for a preset time based on user body movement information obtained through the second camera 342 may be used as the recognition trigger 820. For example, as illustrated in FIG. 6B, if a user indicates a specific object by using a finger and maintains the indication for three seconds, the processor may recognize such indication as the recognition trigger 820. Furthermore, pupil movement information of a user obtained through the third camera 343 may be used as the recognition trigger 820. For example, as illustrated in FIG. 7B, when a movement of a pupil of a user is paused for a given time, the processor may recognize such a pause as the recognition trigger 820. For example, when a movement of a pupil of a user based on an illumination unit (e.g., the illumination LED 242-1, 242-2 in FIG. 2), which is obtained through the third camera 343, is detected at a critical value or less for a critical time or more, the processor may identify such a movement as a paused pupil. In addition, the processor may recognize, as the recognition trigger 820, an eye blinking speed of a user or the degree of a movement of an electronic device recognized by a motion sensor (e.g., an acceleration sensor or a gyro sensor) included in an electronic device.

According to various embodiments, when receiving the recognition trigger 820, the processor may control the first camera 341 to perform photographing by the designated number of frames. For example, the designated number of frames may include one frame. Alternatively, the first camera 341 may perform photographing by the number of frames (e.g., three frames) smaller than a frame rate set in the first camera 341, but an example in which the first camera 341 performs photographing in one frame is described for convenience of description. The first camera 341 does not generate image information at a set frame rate, but generates image information by performing photographing in one frame at specific timing. Accordingly, power consumption according to the photographing of the first camera 341 can be reduced.

According to various embodiments, the first camera 341 that has received the recognition trigger 820 may output an image corresponding to one frame (830). The image outputted by the first camera 341 may be understood as information included in the aforementioned interested image information.

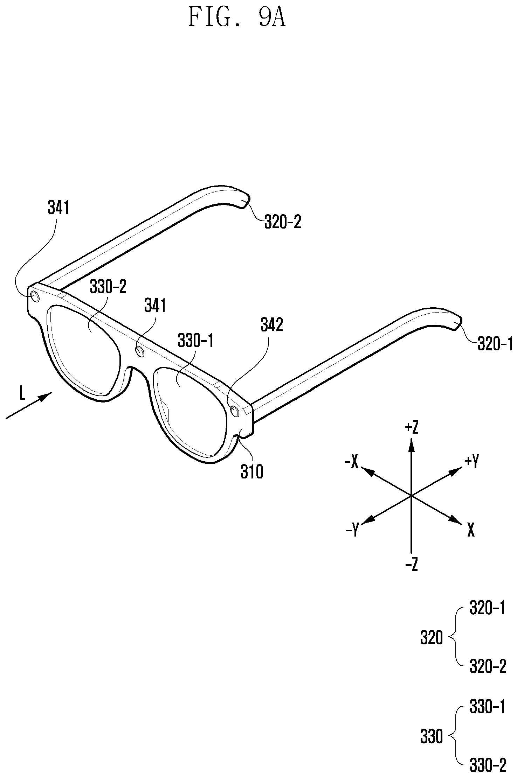

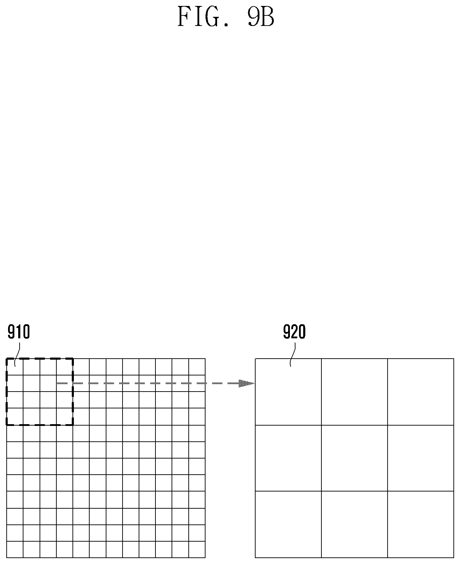

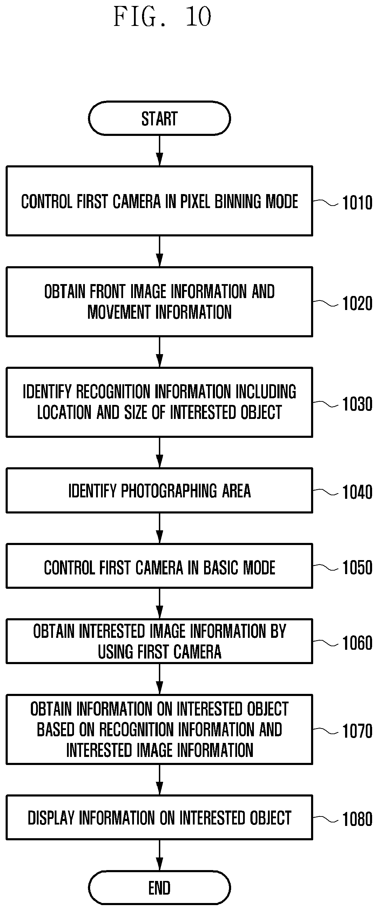

FIG. 9A is a perspective view of an electronic device according to an embodiment of the disclosure. FIG. 9B is a diagram for describing a pixel binning mode of a first camera according to an embodiment of the disclosure. FIG. 10 is a flowchart of an operation of displaying information on an interested object according to an embodiment of the disclosure.

Hereinafter, description is given by using the same reference numerals for elements identical with or similar to the elements described with reference to FIGS. 3A and 3B. Furthermore, in the following description, reference is made by referring to both FIGS. 6A to 6C and FIGS. 7A to 7D.

Referring to FIG. 9A, unlike in the description given with reference to FIG. 3A, a first camera 341 may be disposed on a side on one side of a frame 310, and a second camera 342 may be disposed on a side on the other side of the frame 310. For example, the first camera 341 may be disposed in a -X direction in FIG. 9A, and the second camera 342 may be disposed in a +X direction in FIG. 9A. Furthermore, the first camera 341 disposed in the middle of the frame 310 may be omitted if necessary. In the following description, the first camera 341, unless specially described, may be understood as the first camera 341 disposed in the -X direction in FIG. 9A.

According to various embodiments, front image information may be generated using the first camera 341 and the second camera 342. In an embodiment, the first camera 341 may be a camera having relatively better performance (e.g., resolution, the size of an image sensor or optical performance) than the second camera 342.

In an embodiment, as illustrated in FIG. 9B, the processor may control the first camera 341 in a pixel binning mode in which output resolution of the first camera 341 is changed into resolution different from first resolution, that is, maximum output resolution according to the specification of the first camera 341 at operation 1010.

For example, referring to FIG. 9B, resolution may be reduced from 2560 x 1920 resolution to 640 x 480 resolution by constructing 4 x 4 pixels of a plurality of pixels 910 into one pixel 920. In this case, pixel binning may mean a camera control method of forcedly lowering resolution by constructing a plurality of pixels as one pixel. If such a pixel binning method is used, power consumption can be reduced because the number of pixels of an image sensor to be read (or scanned) is reduced. A pixel binning method according to various embodiments of the disclosure is not limited. The pixel binning mode of the first camera 341 may be set using various pixel binning methods commonly used by a person skilled in the art. In an embodiment, the processor may set the pixel binning mode so that output resolution of the first camera 341 becomes second resolution, that is, resolution of the second camera 342. In this case, images generated using the first camera 341 and the second camera 342 may have the same resolution.

According to various embodiments, the processor may operate the second camera 342 and the first camera 341 in the pixel binning mode at a preconfigured control numerical value, and may control the second camera 342 and the first camera 341 to generate front image information by photographing the front of the frame 310. In this case, the preconfigured control numerical value may include an iris value (or an F value), shutter speed, ISO and frame rate of a camera. In an embodiment, the aforementioned control numerical value may be adaptively adjusted so that photographing is performed at a proper exposure value determined by an exposure system included in the camera. The processor may control the second camera 342 so that the first camera 341 and the second camera 342 generate front image information in real time. For example, the first camera 341 and the second camera 342 may continuously photograph the front at a frame rate of 24 fps, 30 fps or 60 fps. For example, the first camera 341 and the second camera 342 may photograph the front by maintaining an activation state. At this time, the first camera 341 may maintain the pixel binning mode. The processor may obtain the front image information generated by the first camera 341 and the second camera 342 at operation 1020.

According to various embodiments, the processor may obtain movement information of a body of a user through the first camera 341 and the second camera 342 at operation 1020.

For example, the first camera 341 and the second camera 342 may detect a movement of a body of a user. The movement may be detected through the first camera 341 and the second camera 342 disposed at different locations. In an embodiment, as illustrated in FIGS. 6A to 6C, the body of the user may be the finger 610 of the user. The processor may divide the body of the user based on front image information obtained through the first camera 341 and the second camera 342, and may track the movement. The finger is merely an example. The processor may track the movement by recognizing the body of the user included in the front image information. Movement information M of the body of the user may be obtained various ways. For example, the processor may select a specific image in the front image information. The processor may extract and store reference information (e.g., color information or light and shade information) of a characteristic part (e.g., a finger) by analyzing the selected image. Thereafter, the processor may use a method of tracking an area coincident with the reference information within a designated range in front image information received in real time. In addition, the processor may obtain the movement information M of the body of the user by using the first camera 341 and the second camera 342 in various ways.

According to another embodiment, the processor may obtain the front image information through the first camera 341 and the second camera 342, and may obtain the movement information through the third camera 343 at operation 1020.

For example, as described above with reference to FIGS. 4 and 7A, the processor may obtain the gaze information 710 of the user by tracking the movement of the pupil of the user through the third camera 343. The gaze information 710 of the user may include movement information of a gaze at which the user gazes. The processor may obtain the movement information of the gaze by mapping the gaze information 710 of the user to front image information.

According to various embodiments, the processor may identify recognition information including a location and size of an interested object at operation 1030.

According to various embodiments, the processor may identify the object 601 indicated by a body of a user based on the movement information M. As described above, the object indicated by the body of the user may be called the "interested object 601." For example, the processor may recognize, as the interested object 601, the object 601 present in the direction D indicated by the finger 610 of the user. The processor may identify recognition information including a location and size of the interested object 601. The location of the interested object 601 may be a specific point (e.g., a point of interest (POI)) or a specific area (e.g., a region of interest (ROI)). The size of the interested object may be defined as an area including a location occupied by an extracted contour line of the interested object 601. For example, the processor may extract the contour line by convoluting a front image. Furthermore, the processor may extract the contour line by using a histogram, that is, exposure information of the front image. In addition, the processor may identify the recognition information including the location and size of the interested object 601 in various ways at operation 1030. For example, the processor may identify the interested object 701 based on the gaze information 710 corresponding to a movement of a pupil of a user identified through the third camera 343. For example, when the gaze information 710 is paused for a preconfigured time, the processor may identify, as the interested object 701, an object overlapped with the gaze information 710.

According to various embodiments, the processor may identify the photographing area 620 including the interested object 601 based on the recognition information at operation 1040.

As described above, a location of the interested object 601 included in the recognition information may mean an area or coordinates of a pixel where image information corresponding to the interested object 601 on an image sensor is obtained. Furthermore, the size of the interested object 601 may mean an area or coordinates of a pixel on the image sensor because the size is an area including a location occupied by the contour line of the interested object 601. The processor may identify the photographing area 620 where the interested object 601 can be photographed based on such recognition information. For example, the processor may identify, as the photographing area 620, coordinate information of a pixel where an image corresponding to the interested object 601 on the image sensor can be obtained.

According to various embodiments, the processor may control the first camera 341 in a basic mode at operation 1050.

In the basic mode, resolution of the first camera 341 may be changed into first resolution, that is, maximum resolution according to the specification of the first camera 341. To control the first camera 341 in the basic mode may be understood as a meaning that the pixel binning mode is released.

According to various embodiments, the processor may obtain the interested image information 630, 730 for the photographing area 620, 720 by operating the first camera 341 in the basic mode at operation 1060.

The first resolution, that is, the resolution of the first camera 341, may be higher than second resolution, that is, resolution of the second camera 342. Furthermore, overall performance of the first camera 341 may be higher than performance of the second camera 342. Accordingly, an image captured by the first camera 341 may be a high-quality image having higher resolution than an image captured by the second camera 342. More effective image analysis of the interested object 601, 701 may be possible because the interested image information 630, 730 including the interested object 601, 701 is obtained using the first camera 341, that is, a camera having higher performance than the second camera 342.

According to various embodiments, the interested image information 630, 730 may be obtained in various ways. In an embodiment, the processor may obtain the interested image information 630, 730 by cropping an area corresponding to the photographing area 620, 720 in an image captured by the first camera 341.

According to various embodiments, the processor may obtain the interested image information 630, 730 by scanning a part of the image sensor of the first camera 341. The photographing area 620, 720 may be the coordinates of a pixel on the image sensor. When obtaining the interested image information 630, 730 through the first camera 341 in the basic mode, the processor may perform scanning only when a pixel corresponding to the photographing area 620, 720 is scanned. Accordingly, power consumption can be reduced compared to a case where the entire image sensor is scanned.

According to various embodiments, the processor may obtain information on the interested object 601, 701 based on the recognition information and the interested image information 630, 730 at operation 1070.

The processor may identify information on a shape of the interested object 601, 701 based on the recognition information, and may identify a high-resolution image of the interested object 601, 701 based on the interested image information 630, 730. The processor may obtain information on the interested object 601, 701 by performing image analysis on a photographed image of the interested object 601, 701 in various ways based on the recognition information and the interested image information 630, 730.

According to various embodiments, the processor may display the information on the interested object 601, 701 by using the display at operation 1080.

For example, the information on the interested object 601, 701 may include a name, size (length, area or volume), price, state and other related information of the object. If an electronic device is an electronic device which displays AR, the electronic device may project a visual user interface (UI) onto the window member so that information on the interested object 601, 701 is displayed around an actual object. For a description related to projecting visual information onto the window member through the display, reference is made to the description related to the display in FIG. 2.

In the above description, an embodiment in which front image information is obtained using the first camera 341 and the second camera 342 disposed on both sides of the frame 310 and interested image information is obtained through the first camera 341 has been described, but another embodiment is also possible.

For example, front image information and interested image information may be obtained using only the first camera 341 disposed in the middle of the frame 310. In this embodiment, the first camera 341, that is, a high-performance camera, may consume great power because the first camera 341 continues to maintain the activation state in order to obtain the front image information. In order to solve such a problem, the first camera 341 may be controlled in the pixel binning mode. For example, the first camera 341 may be controlled in the pixel binning mode in an operation of obtaining, by the first camera 341, the front image information, and may be controlled in the basic mode in an operation of obtaining, by the first camera 341, the interested image information.

For another example, the first camera 341 may be disposed on both sides of the frame 310, and the first cameras 341 may obtain front image information and interested image information. In this embodiment, the first camera 341 may be controlled in the pixel binning mode in an operation of obtaining, by the first camera 341, front image information, and may be controlled in the basic mode in an operation of obtaining, by the first camera 341, interested image information. The interested image information may be obtained using only any one of the first cameras 341 disposed on both sides of the frame 310.

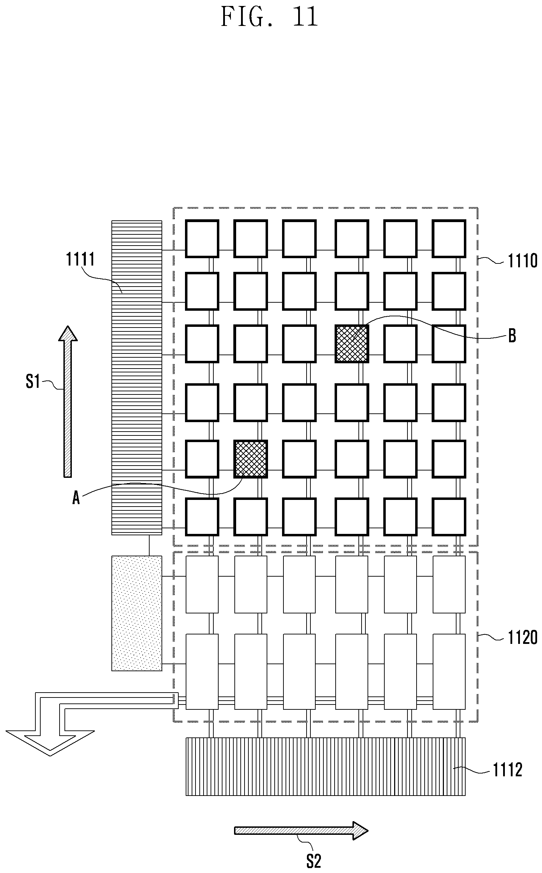

FIG. 11 is a diagram for describing one of methods of generating, by a first camera, interested image information of an identified photographing area according to an embodiment of the disclosure.

According to various embodiments, the image sensor of the first camera 341 may include a pixel area 1110 in which a plurality of pixels is disposed and a processing area 1120 in which an image signal is processed, a row scan circuit 1111 for scanning (or reading) a row direction of a plurality of pixels, and a column scan circuit 1112 for scanning a column direction of a plurality of pixels. The processing area 1120 may include a part in which an image signal having an analog form is processed and a part in which an image signal having an analog form is converted into an image signal having a digital form, for example. The structure of the image sensor illustrated in FIG. 11 is merely an example, and may be variously changed.

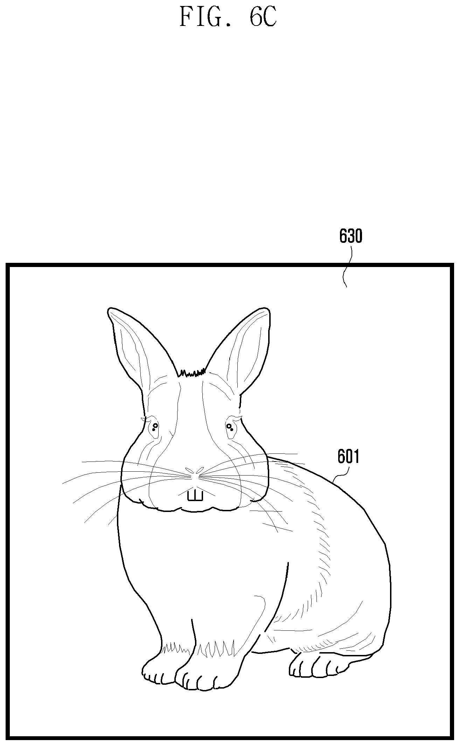

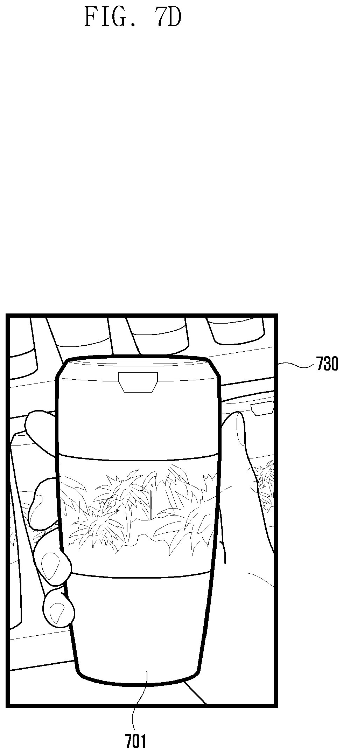

As described above, when a photographing area (e.g., the photographing area 620 in FIG. 6C and/or the photographing area 720 in FIG. 7D) is identified, interested image information for the photographing area may be generated through the first camera 341. The photographing area may mean coordinates or an area of a pixel on the image sensor, in which image information corresponding to an interested object (e.g., the interested object 601 in FIG. 6B and/or the interested object 701 in FIG. 7A) may be obtained.

For example, referring to FIG. 11, a pixel corresponding to coordinates of a start edge of a photographing area may be identified as A, and a pixel corresponding to coordinates of an end edge of the photographing area may be identified as B. Image information received through pixels between A and B may be interested image information for the photographing area.

According to various embodiments, the processor may control the first camera 341 so that only pixels between A and B are scanned using the row scan circuit 1111 and the column scan circuit 1112. For example, the row scan circuit 1111 may scan rows between the A and B pixels (S1), and the column scan circuit 1112 scan columns between the A and B pixels (S2).

As described above, power and the time consumed for scanning can be reduced because image information is obtained by scanning only a specific area without scanning all pixels of an image sensor, and the amount of power consumed for image processing can be reduced because image information smaller than image information of all scanned area is processed. Information of a scanned pixel may be processed by an A/D converter. When a specific area is scanned, the amount of the A/D converter used can also be reduced. Accordingly, consumption power according to an operation of the A/D converter can be reduced.

An electronic device (e.g., the electronic device 101 in FIG. 1, the electronic device 101 in FIG. 2, or the electronic device 300 in FIG. 3A) according to various embodiments disclosed in this document may include a frame (e.g., the frame 310 in FIG. 3A), a window member (e.g., the window member 330 in FIG. 3A) supported by the frame, a display (e.g., the display 160 in FIG. 1) outputting visual information to the window member, a first camera (e.g., the first camera 341 in FIG. 3A) having first resolution, disposed in the frame and photographing the front of the frame, second cameras (e.g., the second camera 342 in FIG. 3A) having second resolution different from the first resolution, disposed on both sides of the frame, respectively, and photographing the front of the frame, and a processor (e.g., the processor 120 in FIG. 1) operatively coupled to the first camera and the second cameras. The processor may obtain front image information and movement information of a body of a user by operating the second cameras at a preset frame rate, may identify recognition information including a location and size of an interested object indicated by the body of the user based on the movement information, may identify a photographing area including the interested object based on the recognition information, may obtain interested image information for the photographing area by operating the first camera, may obtain information on the interested object based on the interested image information, and may display the information on the interested object by using the display.

Furthermore, the processor may obtain the interested image information by performing scanning so that a pixel corresponding to the photographing area in an image sensor of the first camera is included.

Furthermore, the processor may match the photographing area with an image sensor of the first camera, and may obtain the interested image information by using the matched part in the image sensor of the first camera.

Furthermore, the processor may obtain the interested image information by cropping an area corresponding to the photographing area in an image captured by the first camera.

Furthermore, the second resolution of the second camera may be relatively lower than the first resolution of the first camera.

Furthermore, the processor may control the first camera to generate the interested image information as one frame in response to the reception of a preset recognition trigger.

Furthermore, the preset recognition trigger may include the movement of the body of the user being a preset movement or less for a preset time.

Furthermore, the processor may maintain the first camera in a standby mode so that consumption power of the first camera is reduced when the recognition trigger is not received, and may change a mode of the first camera into the standby mode after obtaining the interested image information.

Furthermore, the electronic device may further include a third camera (e.g., the third camera 343 in FIG. 3B) disposed in the frame and photographing the rear of the frame. The processor may obtain a movement of a pupil of the user by operating the third camera, may generate gaze information of the user from the movement of the pupil, and may identify the interested object by mapping the gaze information to the front image information.

Furthermore, the processor may control the first camera to generate the image information as one frame in response to the reception of a preset recognition trigger. The preset recognition trigger may include the movement of the pupil of the user being a preset movement or less for a preset time.

An electronic device (e.g., the electronic device 101 in FIG. 1, the electronic device 101 in FIG. 2 or the electronic device 300 in FIG. 3A) according to various embodiments disclosed in this document may include a frame (e.g., the frame 310 in FIG. 3A), a window member (e.g., the window member 330 in FIG. 3A) supported by the frame, a display (e.g., the display 160 in FIG. 1) outputting visual information to the window member, a first camera (e.g., the first camera 341 in FIG. 9A) having first resolution, disposed in the frame and photographing the front of the frame, a second camera (e.g., the second camera 342 in FIG. 9A) having second resolution different from the first resolution, disposed in the frame at a location different from a location of the first camera, and photographing the front of the frame, and a processor (e.g., the processor 120 in FIG. 1) operatively coupled to the first camera and the second camera. The processor may control the first camera in a pixel binning mode in which output resolution of the first camera is changed into resolution different from the first resolution, may obtain front image information and movement information of a body of a user by operating the second camera and the first camera in the pixel binning mode at a preset frame rate, may identify recognition information including a location and size of an interested object indicated by the body of the user based on the movement information, may identify a photographing area including the interested object based on the recognition information, may obtain interested image information for the photographing area by operating the first camera in a basic mode in which output resolution of the first camera is returned to the first resolution, may obtain information on the interested object based on the interested image information, and may display the information on the interested object by using the display.

Furthermore, the pixel binning mode of the first camera may be a mode in which output resolution of the first camera is changed from the first resolution to the second resolution.

Furthermore, the processor may obtain the interested image information by performing scanning so that a pixel corresponding to the photographing area in an image sensor of the first camera is included.

Furthermore, the processor may match, with an image sensor of the first camera, coordinates corresponding to the photographing area, and may obtain the image information by using the matched part in the image sensor of the first camera.

Furthermore, the processor may obtain the interested image information by cropping an area corresponding to the photographing area in an image captured by the first camera.

Furthermore, the second resolution of the second camera may be relatively lower than the first resolution of the first camera.

Furthermore, the processor may control the first camera to change its mode into the basic mode in response to the reception of a preset recognition trigger and to generate the image information as one frame.

Furthermore, the preconfigured or preset recognition trigger may include the movement of the body of the user being a preconfigured movement or less for a preconfigured time.

Furthermore, the electronic device may further include a third camera (e.g., the third camera 343 in FIG. 3B) disposed in the frame and photographing the rear of the frame. The processor may obtain a movement of a pupil of the user by operating the third camera, may generate gaze information of the user from the movement of the pupil, and may identify the interested object by mapping the gaze information to the front image information.

Furthermore, the processor may control the first camera to change its mode into the basic mode in response to the reception of a preconfigured recognition trigger and to generate the image information as one frame. The preconfigured recognition trigger may include the movement of the pupil of the user being a preconfigured movement or less for a preset time.

Although the drawings have been divided and various embodiments have been described, embodiments described with reference to different drawings may be variously combined within a range in which the embodiments are not contradictory to each other. Accordingly, the embodiments are not allowed to be independently interpreted, and the disclosure should be interpreted by considering various combinations of the embodiments disclosed in this document.

While the disclosure has been shown and described with reference to various embodiments thereof, it will be understood by those skilled in the art that various changes in form and details may be made therein without departing from the spirit and scope of the of the disclosure as defined by the appended claims and their equivalents.

## Claims

1. An electronic device comprising:
a frame;
a window member supported by the frame;
a display outputting visual information to the window member;
a first camera having a first resolution, disposed in the frame and photographing a front of the frame;
second cameras having a second resolution different from the first resolution, disposed on both sides of the frame, respectively, and photographing the front of the frame; and
a processor operatively coupled to the first camera and the second cameras,
wherein the processor is configured to:
obtain front image information and movement information of a body of a user by operating the second cameras at a preset frame rate,
identify recognition information comprising a location and size of an interested object indicated by the body of the user based on the movement information,
identify a photographing area comprising the interested object based on the recognition information,
obtain interested image information for the photographing area by operating the first camera,
obtain information on the interested object based on the interested image information, and
display the information on the interested object by using the display.

2. The electronic device of claim 1, wherein the processor is further configured to obtain the interested image information by performing scanning so that a pixel corresponding to the photographing area in an image sensor of the first camera is included.

3. The electronic device of claim 1, wherein the processor is further configured to:
match the photographing area with a portion of an image sensor of the first camera, and
obtain the interested image information by using the matched portion of the image sensor of the first camera.

4. The electronic device of claim 1, wherein the processor is further configured to obtain the interested image information by cropping an area corresponding to the photographing area in an image captured by the first camera.

5. The electronic device of claim 1, wherein the processor is further configured to control the first camera to generate the interested image information as one frame in response to reception of a preconfigured recognition trigger.

6. The electronic device of claim 5, wherein the preconfigured recognition trigger comprises movement of the body of the user being a preconfigured movement or less for a preconfigured time.

7. The electronic device of claim 5, wherein the processor is further configured to:
maintain the first camera in a standby mode so that consumption power of the first camera is reduced when the preconfigured recognition trigger is not received, and
change a mode of the first camera into the standby mode after obtaining the interested image information.

8. The electronic device of claim 1, further comprising a third camera disposed in the frame and photographing a rear of the frame,
wherein the processor is further configured to:
obtain a movement of a pupil of the user by operating the third camera,
generate gaze information of the user from the movement of the pupil, and
identify the interested object by mapping the gaze information to the front image information.

9. The electronic device of claim 8,
wherein the processor is further configured to control the first camera to generate the interested image information as one frame in response to reception of a preconfigured recognition trigger, and
wherein the preconfigured recognition trigger comprises the movement of the pupil of the user being a preconfigured movement or less for a preconfigured time.

10. An electronic device comprising:
a frame;
a window member supported by the frame;
a display outputting visual information to the window member;
a first camera having first resolution, disposed in the frame and photographing a front of the frame;
a second camera having second resolution different from the first resolution, disposed in the frame at a location different from a location of the first camera, and photographing the front of the frame; and
a processor operatively coupled to the first camera and the second camera,
wherein the processor is configured to:
control the first camera in a pixel binning mode in which output resolution of the first camera is changed into resolution different from the first resolution,
obtain front image information and movement information of a body of a user by operating the second camera and the first camera in the pixel binning mode at a preconfigured frame rate,
identify recognition information comprising a location and size of an interested object indicated by the body of the user based on the movement information,
identify a photographing area comprising the interested object based on the recognition information,
obtain interested image information for the photographing area by operating the first camera in a basic mode in which output resolution of the first camera is returned to the first resolution,
obtain information on the interested object based on the interested image information, and
display the information on the interested object by using the display.

11. The electronic device of claim 10, wherein the pixel binning mode of the first camera is a mode in which output resolution of the first camera is changed from the first resolution to the second resolution.

12. The electronic device of claim 10, wherein the processor is further configured to obtain the interested image information by performing scanning so that a pixel corresponding to the photographing area in an image sensor of the first camera is included.

13. The electronic device of claim 10, wherein the processor is further configured to:
match, with a portion of an image sensor of the first camera, coordinates corresponding to the photographing area; and
obtain the interested image information by using the matched portion in the image sensor of the first camera.

14. The electronic device of claim 10, wherein the processor is further configured to obtain the interested image information by cropping an area corresponding to the photographing area in an image captured by the first camera.

15. The electronic device of claim 10, wherein the processor is further configured to control the first camera to change its mode into the basic mode in response to reception of a preset recognition trigger and to generate the interested image information as one frame.
